(19) Europäisches Patentamt
European Patent Office
Office européen des brevets

(11) **EP 3 278 418 B1**

(12) **FASCICULE DE BREVET EUROPEEN**

(45) Date de publication et mention
de la délivrance du brevet:
**20.02.2019 Bulletin 2019/08**

(51) Int Cl.:
*H02J 7/24* *(2006.01)*    *H02J 7/35* *(2006.01)*
*H02S 40/30* *(2014.01)*    *H02J 3/24* *(2006.01)*
*H02J 3/28* *(2006.01)*    *H02S 50/00* *(2014.01)*

(21) Numéro de dépôt: **16714827.9**

(22) Date de dépôt: **29.03.2016**

(86) Numéro de dépôt international:
**PCT/EP2016/056778**

(87) Numéro de publication internationale:
**WO 2016/156301 (06.10.2016 Gazette 2016/40)**

(54) **PROCÉDÉ, SYSTÈME ET DISPOSITIF DE RÉGULATION DES FLUCTUATIONS DE TENSION INDUITES PAR AU MOINS UNE SOURCE D'ÉNERGIE RENOUVELABLE**

VERFAHREN, SYSTEM UND VORRICHTUNG ZUR REGELUNG VON DURCH MINDESTENS EINE ERNEUERBARE ENERGIEQUELLE INDUZIERTEN SPANNUNGSSCHWANKUNGEN

METHOD, SYSTEM AND DEVICE FOR REGULATING VOLTAGE FLUCTUATIONS INDUCED BY AT LEAST ONE RENEWABLE ENERGY SOURCE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.03.2015 FR 1552663**

(43) Date de publication de la demande:
**07.02.2018 Bulletin 2018/06**

(73) Titulaire: **General Electric Technology GmbH
5400 Baden (CH)**

(72) Inventeur: **FOGGIA, Guillaume
34170 Castelnau-le-Lez (FR)**

(74) Mandataire: **Brevalex
95, rue d'Amsterdam
75378 Paris Cedex 8 (FR)**

(56) Documents cités:
**EP-A1- 1 990 891    EP-A1- 2 772 983
FR-A1- 2 996 032    US-A1- 2011 133 688**

## Description

## DOMAINE TECHNIQUE

Le domaine de l'invention est celui des réseaux de distribution d'énergie auxquels sont connectés des sources d'énergie renouvelable. L'invention vise plus particulièrement à réduire l'effet des fluctuations du niveau de tension provoquées par les fluctuations d'injection de puissance de telles sources d'énergie renouvelable.

## ÉTAT DE LA TECHNIQUE ANTÉRIEURE

La production décentralisée d'énergie électrique a un impact direct sur la qualité de l'alimentation, en particulier au niveau de la distribution.

Ainsi, la présence de sources distribuées de génération d'énergie dans un réseau de distribution d'énergie entraîne généralement une augmentation de l'amplitude de la tension. Avec des sources d'énergie intermittentes et variables, comme c'est le cas des sources d'énergie renouvelable (solaire, éolien), les variations de tension sont amenées à être plus amples, plus brutales et plus fréquentes (oscillations).

Dans de nombreux pays, des limites ou des valeurs attendues sont fixées pour ce qui concerne l'amplitude et la fréquence d'occurrence des changements rapides de tension.

Or du fait de la forte variabilité de l'énergie renouvelable disponible (par exemple un effet transitoire dû au passage d'un nuage au-dessus d'une installation photovoltaïque), la production d'une source d'énergie renouvelable fluctue rapidement et fréquemment, conduisant à de problèmes de qualité de l'alimentation et même de stabilité de la tension.

De ce fait, il apparaît difficile pour les opérateurs de systèmes de distribution d'énergie d'assurer que les limites ou valeurs attendues stipulées par les normes locales ne sont pas outrepassées du fait de changements rapides de tension et de surtensions court-terme.

Une solution doit donc être développée pour qu'une pénétration accrue des sources d'énergie renouvelable puisse être réalisée tout en respectant les limites d'exploitation des systèmes de distribution d'énergie.

On identifiera ici les documents de l'art Antérieur D1 (FR 2 996 032 A1), D2 (EP 1 990 891 A1) et D3 (US 2011/133688 A1).

D1 concerne un procédé de détermination d'une prévision de la puissance électrique fournie pendant un intervalle de temps par une installation de fourniture d'énergie comprenant un système de stockage d'énergie et une centrale électrique utilisant une source d'énergie renouvelable.

Cependant D1 ne décrit pas de compensation qui s'effectue par rapport à une prédiction d'une moyenne de production d'énergie renouvelable mais une compensation qui s'effectue par rapport à un niveau de référence de production d'énergie renouvelable, correspondant à une fraction (40%) de la capacité de production maximale PMAX d'énergie renouvelable ou à une prévision de production maximale PENRmax.

## EXPOSÉ DE L'INVENTION

L'invention s'inscrit dans cette démarche et vise à limiter l'effet des fluctuations rapides de tension causées par les sources d'énergie renouvelable, comme par exemple les sources d'énergie photovoltaïques sous l'effet d'un passage nuageux.

Dans cette optique, l'invention propose un procédé de régulation de tension dans un réseau de distribution d'énergie auquel sont connectés un système de génération d'énergie renouvelable et une unité de stockage d'énergie électrique, caractérisé par le contrôle, au cours d'une fenêtre temporelle, d'une puissance de charge de l'unité de stockage d'énergie pour compenser les variations du niveau de tension instantanée induit par le système de génération d'énergie renouvelable par rapport à une prédiction du niveau de tension moyen induit par le système de génération d'énergie renouvelable au cours de ladite fenêtre temporelle.

Certains aspects préférés mais non limitatifs de ce procédé sont les suivants :

- le système de génération d'énergie renouvelable induit un niveau de tension instantanée qui est fonction d'un paramètre de fonctionnement instantané, et l'unité de stockage d'énergie électrique dispose d'une réserve de puissance qui est contrôlée de manière à ce qu'une consigne de puissance de charge soit augmentée lorsque le paramètre de fonctionnement instantané est supérieur à un paramètre de fonctionnement moyen sur la fenêtre temporelle, et à ce que la consigne de puissance de charge soit diminuée lorsque le paramètre de fonctionnement instantané est inférieur au paramètre de fonctionnement moyen sur la fenêtre temporelle ;
- la consigne de puissance de charge de la réserve de puissance de l'unité de stockage d'énergie électrique est modifiée linéairement en fonction du paramètre de fonctionnement instantané ;
- la réserve de puissance est contrôlée de manière à ce que la variation sur la fenêtre temporelle du niveau de charge de l'unité de stockage d'énergie corresponde à une variation attendue lorsque la moyenne sur la fenêtre temporelle du niveau de tension instantanée induit par le système de génération d'énergie renouvelable correspond au niveau de tension moyen prédit ;
- la consigne de puissance de charge de la réserve de puissance est contrôlée linéairement en fonction du paramètre de fonctionnement instantané sur une plage de paramètres de fonctionnement qui s'étend d'un paramètre de fonctionnement inférieur à un paramètre de fonctionnement supérieur et dans laquelle on retrouve le paramètre de fonctionnement moyen ;

- il comprend une étape préalable de réservation de la réserve de puissance de l'unité de stockage d'énergie électrique dans un plan d'exploitation de l'unité de stockage d'énergie électrique ;

- le système d'énergie renouvelable est un système de génération d'énergie photovoltaïque, le paramètre de fonctionnement correspond à une insolation, le niveau de tension moyen est induit par une insolation moyenne sur la fenêtre temporelle et le niveau de tension instantané est induit par une insolation instantanée ;

- il comprend une prévision de l'insolation moyenne sur la fenêtre temporelle et une mesure de l'insolation instantanée.

L'invention porte également sur un dispositif de contrôle d'une unité de stockage d'énergie destinée à être reliée à un réseau de distribution d'énergie auquel est connecté un système de génération d'énergie renouvelable qui induit un niveau de tension instantanée qui est fonction d'un paramètre de fonctionnement instantané, caractérisé en ce qu'il comporte une unité de mesure du paramètre de fonctionnement instantané et une unité de contrôle d'une puissance de charge de l'unité de stockage d'énergie configurée pour recevoir la mesure du paramètre de fonctionnement instantané et une prévision du paramètre de fonctionnement moyen sur une fenêtre temporelle et pour compenser, sur ladite fenêtre temporelle en fonction de l'écart entre le paramètre de fonctionnement instantané mesuré et le paramètre de fonctionnement moyen prédit, les variations du niveau de tension instantanée induit par le système de génération d'énergie renouvelable par rapport à un niveau de tension moyen correspondant au paramètre de fonctionnement moyen prédit.

Et l'invention s'étend à un système de régulation de tension dans un réseau de distribution d'énergie auquel sont connectés au moins un système de génération d'énergie renouvelable et au moins une unité de stockage d'énergie électrique, le système comprenant au moins un dispositif de contrôle de l'au moins une unité de stockage d'énergie selon l'invention, et un dispositif de supervision centrale comprenant une unité de détermination des paramètres de contrôle de l'au moins un dispositif de contrôle, lesdits paramètres de contrôle comprenant le paramètre de fonctionnement moyen prédit et une loi de correction de la consigne de puissance de charge de l'unité de stockage d'énergie en fonction de l'écart entre le paramètre de fonctionnement instantané mesuré et le paramètre de fonctionnement moyen prédit.

## BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels:

- la figure 1 est un schéma d'un système de régulation de tension dans un réseau de distribution d'énergie selon un mode de réalisation possible de l'invention ;

- la figure 2 est un schéma illustrant le niveau de tension sur un noeud du réseau de distribution d'énergie respectivement en l'absence et en présence de la régulation selon l'invention ;

- la figure 3 est un schéma illustrant un exemple de correction, mise en oeuvre dans l'invention, de consigne de puissance de charge d'une réserve de puissance d'une unité de stockage d'énergie.

## EXPOSÉ DÉTAILLÉ DE MODES DE RÉALISATION PARTICULIERS

L'invention porte sur un procédé et un système de régulation de tension dans un réseau de distribution d'énergie auquel sont connectés au moins un système de génération d'énergie renouvelable et au moins une unité de stockage d'énergie électrique.

La régulation s'effectue au niveau d'un noeud du réseau de distribution d'énergie, par exemple au niveau d'un ou plusieurs noeud(s) pilote(s) représentatif(s) de la tension d'une zone géographique, typiquement le(s) noeud(s) le(s) plus enclin(s) à être soumis à des occurrences de dépassement de valeurs limites ou de fluctuations dues à l'intermittence de l'au moins un système de génération d'énergie renouvelable.

La ou les unités de stockage d'énergie sont connectées sur une même ligne d'alimentation, à distance des systèmes de génération d'énergie renouvelable générant les perturbations. Le ou les noeuds de raccordement du ou des systèmes de génération d'énergie renouvelable (créant les perturbations), le ou les noeuds de raccordement des unités de stockage d'énergie (amortissant les perturbations), et le ou les noeuds pour la tension desquels la régulation agit (là où les perturbations ont le plus d'impact, appelés plus loin noeuds-pilotes) peuvent être tous différents et positionnés en différentes localisations le long d'un même départ.

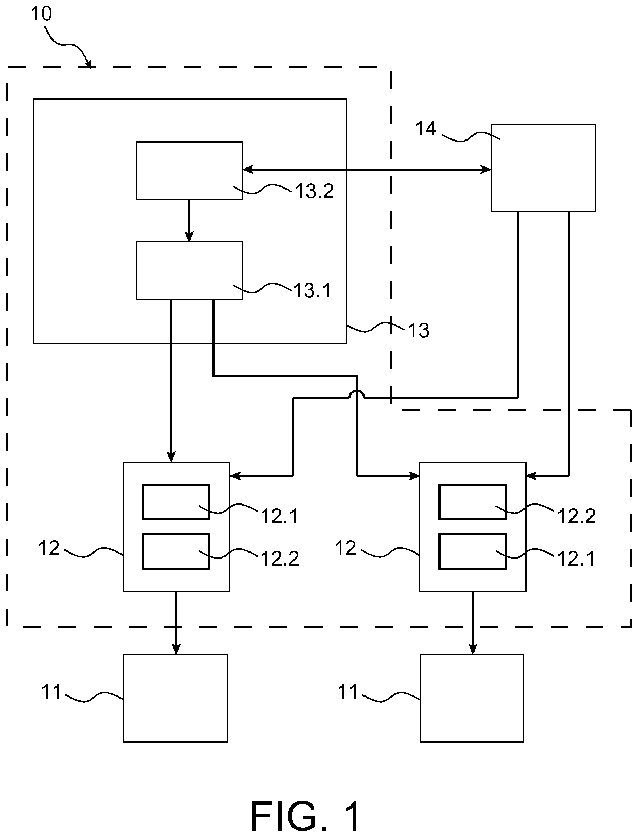

L'invention porte également sur un dispositif de contrôle d'une unité de stockage d'énergie électrique pour la mise en oeuvre du procédé de régulation. En référence à la figure 1, le système de régulation 10 comprend ainsi un dispositif de supervision centrale 13 auquel sont associés un ou plusieurs dispositif de contrôle 12 d'une unité de stockage d'énergie électrique 11.

Une unité de stockage d'énergie 11 comprend typiquement un ou plusieurs modules de batterie en chaîne et/ou en parallèle et un ou plusieurs onduleurs assurant une conversion continu/alternatif. Un dispositif de contrôle 12 d'une unité de stockage d'énergie comprend notamment une unité de contrôle 12-1 de la puissance de charge de l'unité de stockage d'énergie 11 apte à modifier des consignes de puissance active (de charge ou de décharge) qui sont appliquées à l'unité de stockage d'énergie 11 pour permettre la régulation de tension selon l'invention.

L'unité de stockage d'énergie 11 est pilotée par un opérateur de batterie qui peut ne pas être l'opérateur du réseau de distribution d'énergie auquel elle est connectée. Dans le cadre le plus général de l'invention, plusieurs unités de stockage d'énergie 11 sont connectées au réseau et peuvent être exploitées par des opérateurs de batterie différents.

Comme représenté sur la figure 1, un opérateur de batterie dispose d'un module de gestion 14 qui lui permet de définir un plan d'exploitation d'une unité de stockage d'énergie 11, c'est-à-dire une planification de séquences de charge ou de décharge, par exemple à des fins d'écrêtement de la demande de pointe ou de délestage de charge. Le module de gestion 14 fournit ainsi les consignes de puissance active (de charge et de décharge) à l'unité de stockage d'énergie 11, plus particulièrement à son ou ses onduleurs. Dans le cadre de l'invention, ces consignes de puissance sont routées vers le dispositif de contrôle 12 de l'unité de stockage d'énergie pour application d'un terme correctif.

Le système de génération d'énergie renouvelable induit un niveau de tension instantanée sur le réseau de distribution électrique qui est fonction de la puissance instantanée qu'il injecte sur le réseau. Cette puissance instantanée injectée est fonction d'un paramètre représentatif de conditions de fonctionnement instantanées du système de génération d'énergie renouvelable, appelé par la suite paramètre de fonctionnement instantané. Plus particulièrement, on peut retenir pour paramètre de fonctionnement instantané, un paramètre tel que la puissance instantanée injectée varie linéairement en fonction de ce paramètre.

On prendra dans ce qui suit l'exemple d'un système de génération d'énergie photovoltaïque qui induit un niveau de tension instantanée fonction d'un paramètre de fonctionnement instantané qui correspond à l'insolation instantanée (une puissance de rayonnement solaire, en $W/m^2$). L'invention n'est toutefois pas limitée à cet exemple, mais s'étend à d'autres types de systèmes d'énergie renouvelable, comme par exemple un système d'énergie éolienne pour lequel le paramètre de fonctionnement correspond à la puissance du vent élevée au cube.

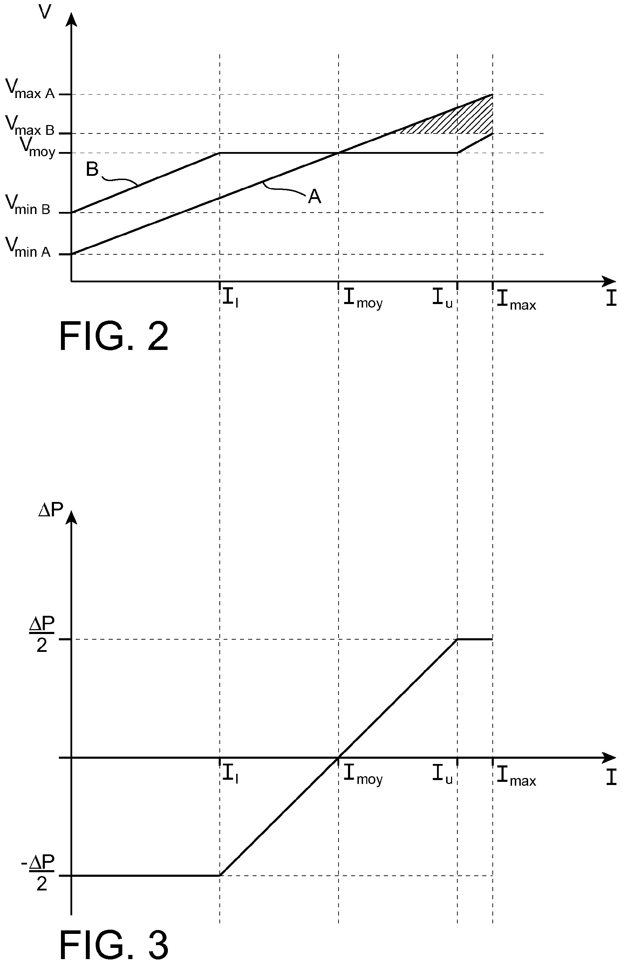

On a représenté sur la courbe A de la figure 2, l'évolution du niveau de tension V sur un noeud pilote du réseau de distribution d'énergie en fonction de l'insolation instantanée I, du fait du raccordement d'un ou plusieurs systèmes de génération d'énergie photovoltaïque sur le même réseau. Cette insolation instantanée I est bornée par une insolation maximale $I_{max}$ qui peut être issue de prévisions météorologiques, ou correspondre à un niveau de tension maximal pouvant être atteint au noeud pilote du fait de l'injection de puissance des systèmes de génération d'énergie photovoltaïque, ou encore correspondre à un niveau de tension maximal acceptable au noeud pilote au vu des normes d'exploitation du réseau de distribution. Le niveau de tension atteint au niveau du noeud-pilote varie ainsi linéairement entre $V_{minA}$ et $V_{maxA}$ en fonction de l'insolation I du fait des injections de puissance du ou des systèmes de génération d'énergie photovoltaïque.

Pour se prémunir des fluctuations rapides et éviter de dépasser la limite haute de tension, une correction minimale de la consigne de puissance de charge de la batterie peut être imposée de sorte que le niveau de tension atteint est alors borné à un niveau maximal $V_u$ auquel correspond une borne supérieure d'insolation $I_u$.

Le procédé selon l'invention exploite une prévision d'un niveau de tension moyen $V_{moy}$ atteint au niveau du noeud-pilote du fait des injections de puissance du ou des systèmes de génération d'énergie photovoltaïque au cours d'une fenêtre temporelle future. Ce niveau moyen $V_{moy}$ correspond à une prévision d'une puissance moyenne fournie par le ou les systèmes de génération d'énergie renouvelable sur un intervalle de temps considéré dans la fenêtre temporelle. Cette puissance moyenne correspond par exemple à une insolation moyenne $I_{moy}$ issue d'une prévision météorologique sur une fenêtre temporelle, par exemple sur la prochaine 1/2h.

Et le procédé selon l'invention comprend une étape, mise en oeuvre par l'unité de contrôle 12-1 de la puissance de charge de l'unité de stockage d'énergie 11, de correction en temps réel de la consigne de puissance de l'unité de stockage d'énergie 11 au cours de ladite fenêtre temporelle. Cette correction est réalisée de manière à compenser les variations du niveau de tension instantané, par rapport au niveau de tension moyen prédit $V_{moy}$, du fait des fluctuations des injections de puissance du ou des systèmes de génération d'énergie renouvelable. De telle manière, la tension au noeud pilote présente un niveau de tension constant au cours de la fenêtre temporelle qui correspond au niveau moyen prédit $V_{moy}$, et ce malgré les fluctuations des injections de puissance du ou des systèmes de génération d'énergie renouvelable, qui sans cette correction généreraient des variations rapides du niveau de tension instantané V au noeud pilote.

La courbe B sur la figure 2 illustre à cet égard le niveau de tension au noeud pilote qui, pour toute une plage d'insolations entre une borne basse $I_l$ et une borne haute $I_u$ autour de l'insolation moyenne $I_{moy}$, reste, après correction, constant au niveau moyen prédit $V_{moy}$. La borne basse $I_l$ peut notamment être déterminée par symétrie de la borne haute $I_u$ par rapport à l'insolation moyenne $I_{moy}$. La borne haute Il peut notamment être déterminée par extrapolation linéaire de la tension limite au noeud pilote.

On constate par ailleurs que la tension au noeud pilote peut fluctuer sur une plage comprise entre $V_{minB}$

et $V_{maxB}$ qui apparaît réduite par rapport à la plage de fluctuations $V_{minA}$-$V_{maxA}$ en absence de régulation. En particulier, la zone hachurée sur la figure 2 représente des niveaux de tension élevés au noeud pilote que l'invention permet d'éviter d'atteindre.

Dans un mode de réalisation possible de l'invention, c'est une réserve de puissance d'amplitude $\Delta P$ de l'unité de stockage d'énergie électrique qui est contrôlée de manière à mettre en oeuvre la régulation selon l'invention en augmentant la consigne de puissance de charge lorsque le paramètre de fonctionnement instantané (insolation dans l'exemple) est supérieur au paramètre de fonctionnement moyen prédit sur la fenêtre temporelle, et en diminuant la consigne de puissance de charge lorsque le paramètre de fonctionnement instantané est inférieur au paramètre de fonctionnement moyen prédit sur la fenêtre temporelle.

Cette réserve de puissance représente typiquement une partie des capacités de stockage de l'unité de stockage d'énergie qui ne peut pas être utilisée pour la réalisation d'autres services du plan d'exploitation de l'unité. Cette réserve peut faire l'objet d'une transaction préalable avec l'opérateur de batterie, le procédé comprenant ainsi une étape préalable de réservation de la réserve de puissance de l'unité de stockage d'énergie électrique dans un plan d'exploitation de l'unité de stockage d'énergie électrique. Cette étape préalable peut être mise en oeuvre par une unité de planification et de réservation 13-2 d'un dispositif 13 de supervision centrale. Et la réserve de puissance peut être constante sur une période de temps, ou bien être définie pour chaque intervalle de temps.

Reprenant l'exemple d'un système photovoltaïque, et comme représenté sur la figure 3, la consigne de puissance de charge de la réserve d'énergie de l'unité de stockage d'énergie électrique 11 peut être contrôlée linéairement en fonction de l'insolation instantanée I sur la plage $I_l$-$I_u$. Et comme également représenté, elle peut aussi être contrôlée en dehors de cette plage pour présenter une valeur constante minimale lorsque l'insolation instantanée I est inférieure à la borne basse $I_l$ et présenter une valeur constante maximale lorsque l'insolation instantanée I est supérieure à la borne haute $I_u$.

Dans un mode de réalisation privilégié, ce contrôle linéaire est réalisé de manière à ce que la consigne de puissance de charge de la réserve d'énergie ne soit pas modifiée, en moyenne sur la fenêtre temporelle, lorsque l'insolation instantanée, moyennée sur la fenêtre temporelle, correspond à l'insolation moyenne prédite $I_{moy}$. Le contrôle est ainsi centré autour du plan d'exploitation fourni par l'opérateur de batteries 14, de sorte qu'il n'y a pas de déviation de l'état attendu du niveau de charge de l'unité de stockage d'énergie lorsque les injections de puissance du ou des systèmes de génération renouvelable sont conformes à la prévision de l'insolation moyenne.

En d'autres termes, la réserve de puissance est contrôlée de manière à ce que la variation sur la fenêtre temporelle du niveau de charge de l'unité de stockage d'énergie corresponde à une variation attendue lorsque la moyenne sur la fenêtre temporelle de la puissance réelle injectée par le système de génération d'énergie renouvelable (induisant ledit niveau de tension instantanée) correspond à la prévision de la puissance moyenne injectée sur la fenêtre temporelle (induisant le niveau de tension moyen prédit).

Dans ce mode de réalisation privilégié, le terme correctif de la consigne de puissance de charge de la réserve d'énergie varie ainsi de $-\Delta P/2$ à $\Delta P/2$ sur la plage $I_l$-$I_u$, est nul pour un niveau d'insolation correspondant à l'insolation moyenne $I_{moy}$, et est constant à $-\Delta P/2$ pour des valeurs d'insolation inférieure à la borne basse $I_l$ et est constant à $\Delta P/2$ pour des valeurs d'insolation supérieure à la borne haute $I_u$.

Le dispositif de contrôle 12 de l'unité de stockage d'énergie électrique 11 comprend par ailleurs une unité 12-2 d'acquisition de mesures du paramètre de fonctionnement instantané, comme par exemple des mesures de la puissance instantanée du rayonnement solaire I. L'unité 12-1 de contrôle de la consigne de puissance de charge de l'unité de stockage d'énergie est alors utilisée, avec les paramètres de contrôle applicables sur la fenêtre temporelle : $I_u$, $I_l$, $I_{moy}$, $\Delta P$ ainsi que la consigne P, pour compenser, sur ladite fenêtre temporelle en fonction de l'écart entre le paramètre de fonctionnement instantané mesuré I et le paramètre de fonctionnement moyen prédit $I_{moy}$, les variations du niveau de tension instantanée induites par le système de génération d'énergie renouvelable par rapport au niveau de tension moyen $V_{moy}$ correspondant au paramètre de fonctionnement moyen prédit.

Comme représenté sur la figure 1, la prévision du paramètre de fonctionnement moyen $I_{moy}$ sur une fenêtre temporelle future est utilisée par une unité de détermination des paramètres de contrôle 13-1 du dispositif 13 de supervision centrale. Les paramètres de contrôle comprennent le paramètre de fonctionnement moyen prédit et une loi de correction de la consigne de puissance de charge de l'unité de stockage d'énergie en fonction de l'écart entre le paramètre de fonctionnement instantané mesuré et le paramètre de fonctionnement moyen prédit. Cette loi applique dans l'exemple de réalisation privilégie une correction linéaire, centrée sur une correction nulle dans le cas où le paramètre de fonctionnement instantané mesuré correspond au paramètre de fonctionnement moyen prédit.

L'unité 13-1 peut ainsi être en charge de déterminer les bornes basse et supérieure $I_l$, $I_u$ du paramètre de fonctionnement. Ces paramètres de contrôle $I_l$, $I_u$ sont basés sur un état prédit du système, sur une plage prédéfinie de variation maximale de la variation de puissance de charge autour d'un point de fonctionnement initial, et sur une minimisation de la plage attendue de variation de tensions au(x) noeud(s) pilote (s), par exemple à partir de la valeur maximale de tension ou du maximum des variations rapides.

L'état prédit est issu d'une analyse prévisionnelle de réseau (essentiellement un calcul de répartition de charges) qui nécessite :

- un accès à des prévisions par intervalle de temps (par exemple 30 min) de production d'énergie renouvelable (ou équivalent d'insolation), typiquement fournies par une application tierce ;
- un accès aux programmes déclarés des ressources de flexibilité (générateur contrôlable, unité de stockage d'énergie), fournis par l'unité 14 pour les unités de stockage qu'elle opère.

L'unité 13-1 peut être chargée de cette analyse prévisionnelle de réseau, ou bien utiliser une telle analyse réalisée par ailleurs. L'unité 13-1 fournit les paramètres de contrôle $I_u$, $I_l$ et $I_{moy}$ au dispositif de contrôle 12 de l'unité de stockage d'énergie, accompagnés de l'amplitude $\Delta P$ qui est une part ou le total de la réserve de puissance négociée par l'unité 13-2 avec le module de gestion 14. Ces paramètres sont applicables sur le même intervalle de temps (par exemple 30 min) que les valeurs moyennes ($V_{moy}$, $I_{moy}$) de l'état du système à partir duquel l'unité 13-1 a déterminé ces paramètres.

Le dispositif de contrôle 12 de l'unité de stockage d'énergie reçoit par ailleurs du module de gestion 14 de l'opérateur de batterie le plan d'exploitation de la batterie qui est basée sur la capacité technique de la batterie, retranchée de la portion de puissance réservée pour la mise en oeuvre de l'invention. Une mise à jour des consignes de puissance de charge, transmises à l'unité 11, et implémentée par l'onduleur, est réalisée à une fréquence (par exemple chaque seconde) cohérente avec la durée d'une variation transitoire de la puissance instantanée (durée d'un passage nuageux typiquement).

Le procédé précédemment décrit se généralise à N unités de stockage d'énergie électrique, M noeuds pilote et P sources d'énergie renouvelable.

La tension a un noeud pilote peut être approximée comme $v_i(k) = v_{i0}(k) + \sum_{j \in \{B,S\}} s_{i,j}(k) * \Delta P_j(k)$, avec

les sensibilités $s_{i,j}(k) = \frac{\partial V_i}{\partial P_j}(k)$, et $\Delta P_j(k)$ l'injection

de puissance d'une source d'énergie électrique de l'ensemble {S} (qui évolue proportionnellement avec l'insolation) ou d'une unité de stockage d'énergie de l'ensemble {B}.

En recherchant $v_i(k) = v_{i0}(k)$, on obtient $\sum_{j \in \{S\}} s_{i,j}(k) * \Delta P_j(k) = -\sum_{j \in \{B\}} s_{i,j}(k) * \Delta P_j(k)$, signifiant que les variations dues aux sources {S} peuvent être compensées par des variations pilotées d'injection de puissance par les unités de stockage d'énergie {B}.

Le problème peut ainsi être exprimé comme un ensemble de contraintes sur les valeurs de tension à certains noeuds pilotes (typiquement ceux les plus concernés par des occurrences de surtension) :

- contraintes sur les valeurs extrêmes de variations rapides de tension ;

- contraintes sur l'amplitude des variations de tension ;
- contraintes sur les capacités des réserves de puissance des unités de stockage d'énergie ;
- contrainte sur la valeur de puissance moyenne prédite {S} ou fournie {B} qui dans le mode de réalisation privilégiée correspond à un terme correctif nul.

Ce problème peut être résolu par programmation linéaire mixte en nombres entiers (MILP pour *Mixed Integer Linear Programming*) en cherchant à minimiser le coût total de la réserve d'énergie activée ou l'amplitude totale de cette réserve. Comme corollaire, la résolution de ce problème vient déterminer les réserves sollicitées $\Delta P_j$ et les bornes basse et haute d'insolation Il, Iu qui sont utilisés par le dispositif de contrôle 12 associé à chaque unité de stockage d'énergie, notamment afin de limiter le contrôle proportionnel dans une plage centrée autour de l'insolation moyenne.

Ainsi, différentes unités de stockage d'énergie peuvent venir participer au même moment, de manière coordonnée et efficace, à la régulation de tension.

On relèvera que le procédé selon l'invention peut être mis en oeuvre de manière continu ou non, par exemple en fonction d'un calendrier préétabli ou en fonction de la fiabilité des prévisions météorologiques.

**Revendications**

1. Procédé de régulation de tension dans un réseau de distribution d'énergie auquel sont connectés un système de génération d'énergie renouvelable et une unité de stockage d'énergie électrique (11), **caractérisé par** le contrôle, au cours d'une fenêtre temporelle, d'une puissance de charge de l'unité de stockage d'énergie (11) pour compenser les variations du niveau de tension instantanée induit par le système de génération d'énergie renouvelable par rapport à une prédiction du niveau de tension moyen induit par le système de génération d'énergie renouvelable au cours de ladite fenêtre temporelle.

2. Procédé selon la revendication 1, dans lequel le système de génération d'énergie renouvelable induit un niveau de tension instantanée qui est fonction d'un paramètre de fonctionnement instantané, et dans lequel l'unité de stockage d'énergie électrique dispose d'une réserve de puissance qui est contrôlée de manière à ce qu'une consigne de puissance de charge soit augmentée lorsque le paramètre de fonctionnement instantané est supérieur à un paramètre de fonctionnement moyen sur la fenêtre temporelle, et à ce que la consigne de puissance de charge soit diminuée lorsque le paramètre de fonctionnement instantané est inférieur au paramètre de fonctionnement moyen sur la fenêtre temporelle.

**3.** Procédé selon la revendication 2, dans lequel la consigne de puissance de charge de la réserve de puissance de l'unité de stockage d'énergie électrique est modifiée linéairement en fonction du paramètre de fonctionnement instantané.

**4.** Procédé selon la revendication 3, dans lequel la réserve de puissance est contrôlée de manière à ce que la variation sur la fenêtre temporelle du niveau de charge de l'unité de stockage d'énergie corresponde à une variation attendue lorsque la moyenne sur la fenêtre temporelle du niveau de tension instantanée induit par le système de génération d'énergie renouvelable correspond au niveau de tension moyen prédit.

**5.** Procédé selon l'une des revendications 3 et 4, dans lequel la consigne de puissance de charge de la réserve de puissance est contrôlée linéairement en fonction du paramètre de fonctionnement instantané sur une plage de paramètres de fonctionnement qui s'étend d'un paramètre de fonctionnement inférieur ($I_u$) à un paramètre de fonctionnement supérieur ($I_l$) et dans laquelle on retrouve le paramètre de fonctionnement moyen ($I_{moy}$).

**6.** Procédé selon l'une des revendications 1 à 5, comprenant une étape préalable de réservation de la réserve de puissance de l'unité de stockage d'énergie électrique dans un plan d'exploitation de l'unité de stockage d'énergie électrique.

**7.** Procédé selon l'une des revendications 1 à 6, dans lequel le système d'énergie renouvelable est un système de génération d'énergie photovoltaïque, le paramètre de fonctionnement correspond à une insolation, le niveau de tension moyen est induit par une insolation moyenne sur la fenêtre temporelle et le niveau de tension instantané est induit par une insolation instantanée.

**8.** Procédé selon la revendication 7, comprenant une prévision de l'insolation moyenne sur la fenêtre temporelle et une mesure de l'insolation instantanée.

**9.** Dispositif de contrôle (12) d'une unité de stockage d'énergie (11) destinée à être reliée à un réseau de distribution d'énergie auquel est connecté un système de génération d'énergie renouvelable qui induit un niveau de tension instantanée qui est fonction d'un paramètre de fonctionnement instantané, **caractérisé en ce qu'**il comporte une unité de mesure du paramètre de fonctionnement instantané (12-2) et une unité de contrôle d'une puissance de charge (12-1) de l'unité de stockage d'énergie (11) configurée pour recevoir la mesure du paramètre de fonctionnement instantané (I) et une prévision du paramètre de fonctionnement moyen sur une fenêtre temporelle ($I_{moy}$) et pour compenser, sur ladite fenêtre temporelle en fonction de l'écart entre le paramètre de fonctionnement instantané mesuré et le paramètre de fonctionnement moyen prédit, les variations du niveau de tension instantanée induit par le système de génération d'énergie renouvelable par rapport à un niveau de tension moyen correspondant au paramètre de fonctionnement moyen prédit.

**10.** Système (10) de régulation de tension dans un réseau de distribution d'énergie auquel sont connectés au moins un système de génération d'énergie renouvelable et au moins une unité de stockage d'énergie électrique, le système comprenant au moins un dispositif de contrôle (12) de l'au moins une unité de stockage d'énergie selon la revendication 9, et un dispositif de supervision centrale (13) comprenant une unité (13-1) de détermination des paramètres de contrôle de l'au moins un dispositif de contrôle (12), lesdits paramètres de contrôle comprenant le paramètre de fonctionnement moyen prédit et une loi de correction de la consigne de puissance de charge de l'unité de stockage d'énergie en fonction de l'écart entre le paramètre de fonctionnement instantané mesuré et le paramètre de fonctionnement moyen prédit.

**Patentansprüche**

**1.** Verfahren zur Spannungsregelung in einem Energieverteilnetz, an das ein System zur Erzeugung erneuerbarer Energie sowie eine Einheit zur Speicherung elektrischer Energie (11) angeschlossen sind, **gekennzeichnet durch** die Steuerung, im Verlauf eines Zeitfensters, einer Ladeleistung der Energiespeichereinheit (11) zum Kompensieren der Variationen des instantanen Spannungsniveaus, induziert durch das System zur Erzeugung erneuerbarer Energie, bezüglich einer Vorhersage des mittleren Spannungsniveaus, induziert durch das System zur Erzeugung erneuerbarer Energie, im Verlauf des Zeitfensters.

**2.** Verfahren nach Anspruch 1, bei dem das System zur Erzeugung erneuerbarer Energie ein instantanes Spannungsniveau induziert, das eine Funktion eines instantanen Funktionsparameters ist, und bei dem die Einheit zur Speicherung elektrischer Energie über eine Leistungsreserve verfügt, die derart gesteuert wird, dass ein Ladeleistungssollwert erhöht wird, wenn der instantane Funktionsparameter größer ist als ein mittlerer Funktionsparameter auf dem Zeitfenster, und dass der Ladeleistungssollwert verringert wird, wenn der instantane Funktionsparameter kleiner ist als der mittlere Funktionsparameter auf dem Zeitfenster.

**3.** Verfahren nach Anspruch 2, bei dem der Ladeleistungssollwert der Leistungsreserve der Einheit zur Speicherung elektrischer Energie linear als Funktion des instantanen Funktionsparameters modifiziert wird.

**4.** Verfahren nach Anspruch 3, bei dem die Leistungsreserve derart gesteuert wird, dass die Variation des Ladungsniveaus der Energiespeichereinheit auf dem Zeitfenster einer erwarteten Variation entspricht, wenn der Mittelwert des instantanen Spannungsniveaus, das durch das System zur Erzeugung erneuerbarer Energie induziert wird, auf dem Zeitfenster dem vorhergesagten mittleren Spannungsniveau entspricht.

**5.** Verfahren nach einem der Ansprüche 3 und 4, bei dem der Ladeleistungssollwert der Leistungsreserve linear als Funktion des instantanen Funktionsparameters über einen Bereich von Funktionsparametern gesteuert wird, der sich von einem kleineren Funktionsparameter ($I_u$) zu einem größeren Funktionsparameter ($I_l$) erstreckt, und in dem man den mittleren Funktionsparameter ($I_{moy}$) findet.

**6.** Verfahren nach einem der Ansprüche 1 bis 5, umfassend einen vorhergehenden Schritt der Reservierung der Leistungsreserve der Einheit zur Speicherung elektrischer Energie in einem Arbeitsplan der Einheit zur Speicherung elektrischer Energie.

**7.** Verfahren nach einem der Ansprüche 1 bis 6, bei dem das erneuerbare Energiesystem ein System zur Erzeugung photovoltaischer Energie ist, wobei der Funktionsparameter einer Sonneneinstrahlung entspricht, wobei das mittlere Spannungsniveau durch eine mittlere Sonneneinstrahlung auf dem Zeitfenster induziert wird, und wobei das instantane Spannungsniveau durch eine instantane Sonneneinstrahlung induziert wird.

**8.** Verfahren nach Anspruch 7, umfassend eine Vorhersage der mittleren Sonneneinstrahlung auf dem Zeitfenster sowie eine Messung der instantanen Sonneneinstrahlung.

**9.** Steuervorrichtung (12) für eine Energiespeichereinheit (11), die dazu ausgelegt ist, mit einem Energieverteilnetz verbunden zu sein, an das ein System zur Erzeugung erneuerbarer Energie angeschlossen ist, das ein instantanes Spannungsniveau induziert, das eine Funktion eines instantanen Funktionsparameters ist, **dadurch gekennzeichnet, dass** sie eine Einheit zum Messen des instantanen Funktionsparameters (12-2) sowie eine Einheit zur Steuerung einer Ladeleistung (12-1) der Energiespeichereinheit (11) umfasst, die dazu konfiguriert ist, die Messung des instantanen Funktionsparameters (I) und eine Vorhersage des mittleren Funktionsparameters auf einem Zeitfenster ($I_{moy}$) zu empfangen, und auf dem Zeitfenster als Funktion des Abstands zwischen dem gemessenen instantanen Funktionsparameter und dem vorhergesagten mittleren Funktionsparameter die Variationen des instantanen Spannungsniveaus, induziert durch das System zur Erzeugung erneuerbarer Energie, bezüglich eines mittleren Spannungsniveaus zu kompensieren, das dem vorhergesagten mittleren Funktionsparameter entspricht.

**10.** System (10) zur Spannungsregelung in einem Energieverteilnetz, an das wenigstens ein System zur Erzeugung erneuerbarer Energie und wenigstens eine Einheit zur Speicherung elektrischer Energie angeschlossen sind, wobei das System wenigstens eine Vorrichtung (12) zur Steuerung der wenigstens einen Energiespeichereinheit nach Anspruch 9 umfasst, sowie eine zentrale Überwachungsvorrichtung (13), umfassend eine Einheit (13-1) zur Bestimmung der Steuerparameter der wenigstens einen Steuervorrichtung (12), wobei die Steuerparameter den vorhergesagten mittleren Funktionsparameter sowie ein Gesetz zum Korrigieren des Ladeleistungssollwerts der Energiespeichereinheit als Funktion des Abstands zwischen dem gemessenen instantanen Funktionsparameter und dem vorhergesagten mittleren Funktionsparameter umfasst.

**Claims**

**1.** A method of regulating voltage in an energy distribution network to which are connected both a renewable energy generation system and an electrical energy storage unit (11), the method being **characterized in that**, over a time window, a charging power of the energy storage unit (11) is controlled so as to compensate for variations in the instantaneous voltage level induced by the renewable energy generation system relative to a prediction of the mean voltage level induced by the renewable energy generation system over said time window.

**2.** A method according to claim 1, wherein the renewable energy generation system induces an instantaneous voltage level that is a function of an instantaneous operating parameter, and wherein the electrical energy storage unit has a power reserve that is controlled in such a manner that a charging power setpoint is increased when the instantaneous operating parameter is greater than a mean operating parameter over the time window, and the charging power setpoint is reduced when the instantaneous operating parameter is lower than the mean operating parameter over the time window.

3. A method according to claim 2, wherein the charging power setpoint for the power reserve of the electrical energy storage unit is modified linearly as a function of the instantaneous operating parameter.

4. A method according to claim 3, wherein the power reserve is controlled in such a manner that, over the time window, the variation of the charge level of the energy storage unit corresponds to an expected variation when, over the time window, the mean of the instantaneous voltage level induced by the renewable energy generation system corresponds to the predicted mean voltage level.

5. A method according to claim 3 and claim 4, wherein the charging power setpoint for the power reserve is controlled linearly as a function of the instantaneous operating parameter over a range of operating parameters that extend from a lower operating parameter (Il) to an upper operating parameter (Iu) and within which the mean operating parameter (Imean) is found.

6. A method according to any one of claims 1 to 5, comprising a prior step of reserving the power reserve of the electrical energy storage unit in an operating plan for the electrical energy storage unit.

7. A method according to any one of claims 1 to 6, wherein the renewable energy system is a photovoltaic energy generation system, the operating parameter corresponds to insolation, the mean voltage level is induced by a mean insolation over the time window and the instantaneous voltage level is induced by an instantaneous insolation.

8. A method according to claim 7, including a prediction of the mean insolation for the time window and a measurement of the instantaneous insolation.

9. A control device (12) for controlling an energy storage unit (11) designed to be connected to an energy distribution network to which there is connected a renewable energy generation system that induces an instantaneous voltage level that is a function of an instantaneous operating parameter, the device being **characterized in that** it comprises a unit (12-2) for measuring the instantaneous operating parameter and a control unit for controlling a charging power (12-1) of the energy storage unit (11) configured to receive the instantaneous operating parameter (I) measurement and a prediction of the mean operating parameter over a time window (Imean) and to act, over said time window, as a function of the difference between the measured instantaneous operating parameter and the predicted mean operating parameter, to compensate for the variations in the instantaneous voltage level induced by the renewable energy generation system relative to a mean voltage level corresponding to the predicted mean operating parameter.

10. A system (10) for regulating voltage in an energy distribution network to which there are connected both at least one renewable energy generation system and at least one electrical energy storage unit, the system comprising at least one control device (12) for controlling at least one energy storage unit according to claim 9, and a central supervisor device (13) comprising a unit (13-1) for determining control parameters for the at least one control device (12), said control parameters comprising the predicted mean operating parameter and a rule for correcting the charging power setpoint for the energy storage unit as a function of the difference between the measured instantaneous operating parameter and the predicted mean operating parameter.

FIG. 1

FIG. 2

FIG. 3

## RÉFÉRENCES CITÉES DANS LA DESCRIPTION

**Documents brevets cités dans la description**

- FR 2996032 A1
- EP 1990891 A1
- US 2011133688 A1